## Europäisches Patentamt

## European Patent Office

## Office européen des brevets

(19)

(11) Numéro de publication : **0 078 510**
**B1**

(12) **FASCICULE DE BREVET EUROPÉEN**

(45) Date de publication du fascicule du brevet :
21.01.87

(51) Int. Cl.⁴ : **G 04 B 47/06**, G 04 G 9/00,
G 01 C 17/28

(21) Numéro de dépôt : **82109982.7**

(22) Date de dépôt : **28.10.82**

(54) **Pièce d'horlogerie comportant un dispositif d'orientation.**

(30) Priorité : **30.10.81 FR 8120767**

(43) Date de publication de la demande :
**11.05.83 Bulletin 83/19**

(45) Mention de la délivrance du brevet :
**21.01.87 Bulletin 87/04**

(84) Etats contractants désignés :
**CH DE GB LI**

(56) Documents cités :
**WO-A-82 /031 32**
**DE-A- 2 742 242**
**US-A- 3 197 880**

(73) Titulaire : **Omega SA**
**Rue Stämpfli 96**
**CH-2500 Bienne (CH)**

(72) Inventeur : **Gygax, Claude-André**
**Chemin des Bourdons 8**
**CH-2533 Evilard (CH)**
Inventeur : **Jaccard, Pierre-Ernest**
**Rue du Soleil 7**
**CH-2605 Sonceboz (CH)**
Inventeur : **Jaunin, Jean-Pierre**
**Chemin des Lorettes 2A**
**CH-2520 La Neuveville (CH)**

(74) Mandataire : **de Raemy, Jacques et al**
**SMH Société Suisse de Microélectronique et d'Horlo-**
**gerie S.A. Département Brevets et Licences Faubourg**
**du Lac 6**
**CH-2501 Bienne (CH)**

Jouve, 18, rue St-Denis, 75001 Paris, France

# 0 078 510

## Description

La présente invention est relative à une pièce d'horlogerie comportant un affichage pour afficher des données horaires et un dispositif d'orientation sensible à la direction et au sens du champ magnétique terrestre, ledit dispositif d'orientation comprenant un détecteur statique et un affichage électro-optique pour afficher les données issues dudit détecteur.

On connaît déjà des montres-boussoles. Si l'on se reporte par exemple à la demande FR-A-2 438 861 et plus particulièrement à la figure 1 de ladite demande, on peut voir une montre-bracelet qui comporte un cadran, dont une partie est réservée à l'affichage numérique du temps au moyen d'un dispositif électronique connu et dont une autre partie est occupée par une boussole qui met en œuvre une aiguille aimantée pour indiquer la direction du Nord magnétique. En variante, la demande citée propose la juxtaposition de la boussole mentionnée et d'un affichage analogique classique comportant des aiguilles entraînées par un micromoteur pas à pas.

Les éléments garde-temps et boussole à aiguille aimantée sont également présents dans le brevet CH-A-346 826 mais superposés l'un à l'autre, la boussole comportant de surcroît un réglage de déclinaison permettant de prendre en compte l'angle existant entre le Nord géographique et le Nord magnétique et une lunette rotative permettant de suivre une direction connue par rapport au Nord.

De tels dispositifs présentent l'inconvénient d'être encombrants et fragiles. En effet, si l'on veut assurer une certaine précision de visée, lors d'une course d'orientation par exemple, il sera nécessaire de disposer d'une aiguille de boussole présentant une certaine longueur, condition qui ne paraît pas être remplie par le premier arrangement proposé ci-dessus dans lequel l'élément boussole miniaturisé ne saurait indiquer que grossièrement la direction à suivre. Si le second arrangement cité permet sans conteste une meilleure précision sur la direction à suivre, on s'aperçoit immédiatement qu'il est très encombrant puisqu'il utilise toute la surface utile de la montre. De plus, la construction de tels dispositifs nécessite un soin particulier si l'on désire obtenir des indications parfaitement reproductibles. Ceci amène à mettre en œuvre par exemple des pivots réalisés avec précision mais sensibles aux chocs et donc relativement fragiles. D'autre part, une boussole à aiguille aimantée qui soit réellement exploitable nécessite un amortissement de son aiguille soit par un frein à courants de Foucault soit par un liquide ce qui, on le comprendra, compliquera notablement sa construction et augmentera son encombrement. Enfin, un dispositif d'orientation mécanique est mal adapté à une montre toute électronique car il réintroduit des éléments mécaniques en mouvement à un produit où justement ces éléments ont été éliminés.

Le document US-A-3 197 880 décrit pour sa part un dispositif d'orientation comprenant un détecteur statique utilisant deux sondes à effet Hall et un affichage électro-optique utilisant une aiguille et un cadran. Il ne comporte aucun moyen qui indique dans quel sens il faut faire tourner l'appareil pour faire coïncider un axe fixe dont il serait pourvu avec la direction du champ magnétique terrestre. Une telle disposition est cependant nécessaire si le système décrit dans le document cité était monté dans une montre servant de boussole et utilisée par exemple pour des courses d'orientation.

C'est le but de la présente invention de remédier aux inconvénients cités grâce aux moyens qui apparaissent dans la revendication.

L'invention sera comprise maintenant à la lumière de la description qui suit et pour l'intelligence de laquelle on se référera aux dessins donnés à titre d'exemples parmi lesquels :

Les figures 1a à 1d   représentent une première variante d'exécution de la pièce d'horlogerie selon l'invention.

Les figures 2a et 2b   représentent une seconde variante d'exécution de la pièce d'horlogerie selon l'invention.

La figure 3a   représente en perspective et à grande échelle le dispositif détecteur de champ magnétique terrestre utilisé dans les pièces d'horlogerie illustrées aux figures 1a à 1d, 2a et 2b.

La figure 3b   représente à échelle agrandie un élément sensible du dispositif détecteur de la figure 3a.

La figure 4   est un schéma électrique représentant le principe de fonctionnement de la pièce d'horlogerie équipée d'un dispositif d'orientation selon l'invention.

La figure 5   est un schéma électrique représentant le fonctionnement de la pièce d'horlogerie illustrée aux figures 1a à 1d.

La figure 6   est un schéma électrique représentant le fonctionnement de la pièce d'horlogerie illustrée aux figures 2a et 2b.

La figure 7   est un schéma électrique applicable en variante à l'un quelconque des schémas illustrés aux figures 4, 5 et 6.

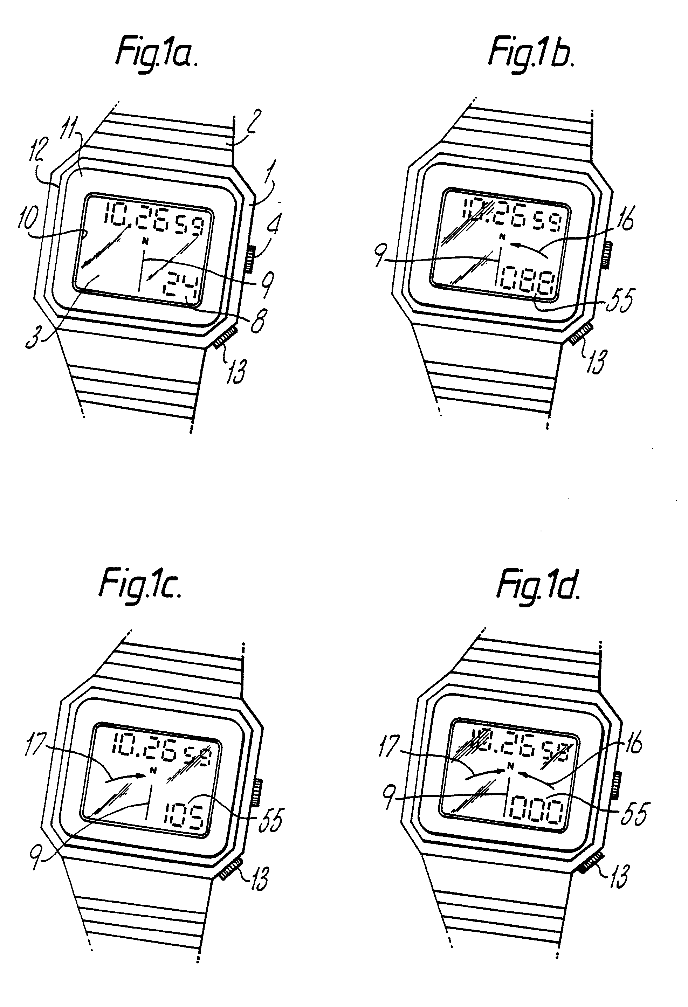

Comme il ressort des figures 1a à 1d, la pièce d'horlogerie comporte un boîtier 1 auquel est attaché un bracelet 2 et un affichage 3 apparaissant sous une glace de protection. La montre peut comporter un système de mise à l'heure 4 pour corriger les indications de l'heure 5, de la minute 6, de la seconde 7 et de la date 8. Dans l'exemple montré aux figures 1a à 1d, l'indication du temps et de la date apparaît sous forme numérique au moyen de segments contenus dans une cellule à cristal liquide. On pourrait ajouter aux indications mentionnées l'affichage du temps écoulé, d'un temps d'alarme, etc. En temps normal et

2

selon une version préférée de l'invention seules apparaissent sur l'affichage les informations relatives au temps, comme cela est apparent sur la figure 1a.

Comme cela est aussi apparent sur les figures 1a à 1d, la pièce d'horlogerie comprend un axe fixe 9 qui peut être gravé ou décalqué sur la face intérieure de la glace ou encore être constitué par un segment incorporé à la cellule à cristal liquide. Cet axe pourrait aussi être assimilé à un bord 10 du cache 11 ou encore à une arête 12 de la carrure. Dans l'exemple montré sur les figures, l'axe fixe 9 est surmonté d'une lettre N indiquant la direction du Nord. Comme on le voit sur les mêmes figures, la montre est munie d'une commande supplémentaire 13 qui peut se présenter sous la forme d'un bouton-poussoir.

Lorsqu'on presse sur le poussoir 13, l'affichage de la montre fait apparaître, outre les indications relatives à l'heure, à la minute et à la seconde qui sont conservées, des indications relatives à la direction du champ magnétique terrestre, comme on peut le voir sur les figures 1b à 1d. Dans ce cas, une plage 55 composée de trois chiffres est affichée à droite de l'axe fixe 9. Comme on peut le voir en figure 1b, la plage 55 est aussi surmontée d'une flèche 16 qui apparaît sur l'affichage. Ces diverses indications représentent d'abord l'angle en degré ou azimut que forme l'axe fixe 9 par rapport au Nord et qui peut être lu des chiffres affichés sur la plage 55 et ensuite la direction dans laquelle il faut tourner la montre pour aligner l'axe fixe 9 avec le Nord si l'on se réfère à la pointe de la flèche.

Ainsi dans l'exemple de la figure 1b, l'axe fixe 9 fait un angle de 88° avec le Nord et il faut faire tourner la montre dans le sens de la flèche 16 pour faire coïncider cet axe avec le Nord. En d'autres termes, l'indication portée par la plage 55 (88°) et la présence de la flèche 16 signifie que si, à partir du lieu où l'on se trouve, on se dirige dans le sens de l'axe fixe 9, cette direction sera celle de l'azimut 88° Est. La figure 1d montre comment se présente l'affichage au moment où intervient cette situation de coïncidence : tous les chiffres de la plage 55 indiquent zéro et, en plus de la première flèche 16, apparaît une seconde flèche 17 dont la pointe est dirigée contre la pointe de la première flèche 16. Il est cependant clair que dans cette situation on pourrait faire disparaître les deux flèches 16 et 17 puisque les chiffres, par les valeurs zéro qu'ils contiennent, indiquent déjà la situation de coïncidence. Si l'on considère maintenant la figure 1c, on comprendra que l'axe fixe 9 est dirigé selon l'azimut 105° Ouest, et que si l'on désire aligner ledit axe sur la direction du champ magnétique terrestre, il faudra tourner la pièce d'horlogerie selon la flèche 17 jusqu'au moment où la plage 55 indique zéro. A cet instant, on retrouvera la situation présentée à propos de la figure 1d.

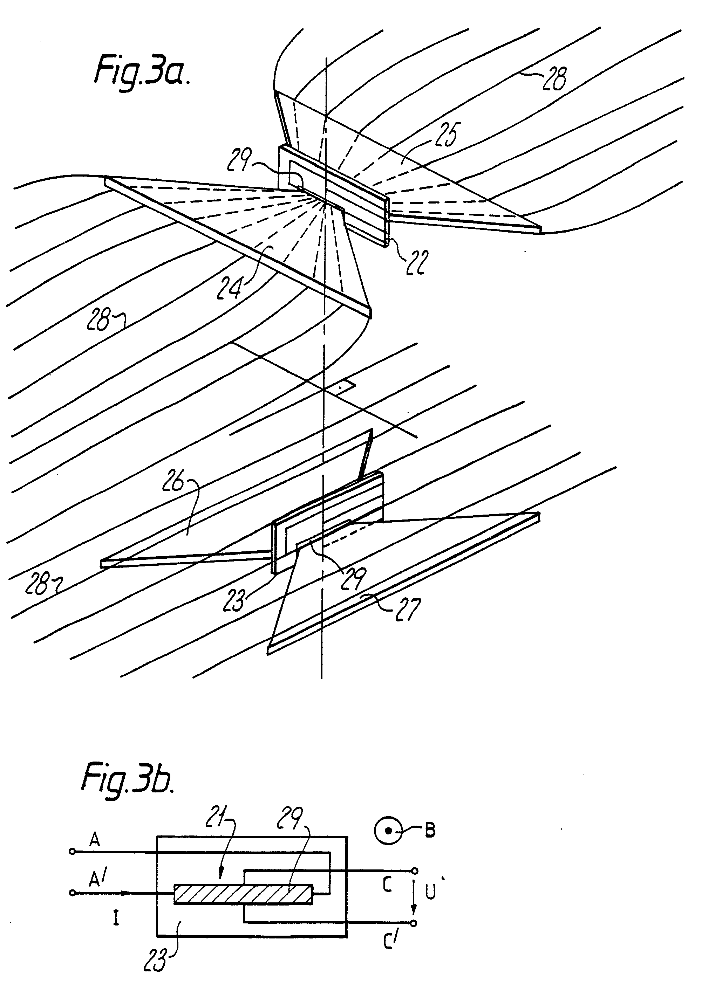

Les indications relatives à la direction et au sens du champ magnétique terrestre qui apparaissent sur l'affichage de la montre comme on vient de le voir sont issues, selon l'invention, d'un dispositif comprenant un détecteur statique. Des capteurs à semi-conducteurs sont mis à profit pour former ce détecteur. Dans le dispositif d'orientation, objet de la présente invention, il s'agit de mesurer la composante horizontale et le sens du champ magnétique terrestre. Pour ce faire, on utilisera préférablement, comme cela est montré à la figure 3a, deux sondes à effet Hall non coplanaires et disposées orthogonalement l'une par rapport à l'autre, puisqu'une seule de ces sondes n'est capable d'apprécier sans ambiguïté la direction, le sens et l'intensité du flux magnétique que si ledit flux est perpendiculaire à la face sensible de la sonde. Ces sondes, composées par exemple d'arseniure ou d'antimoniure d'indium sont simples à fabriquer et peuvent être réalisées en de très faible dimensions. Elles conviennent donc bien pour être adaptées à l'espace réduit qu'offre une montre-bracelet.

La figure 3b est une figure en élévation d'une telle sonde 23 dont la partie active est représentée en 21. Si l'on soumet ses faces sensibles 29 à une induction magnétique B perpendiculaire au plan de la figure et qu'on alimente les premières électrodes A-A' par un courant I, on recueillera aux bornes des secondes électrodes C-C' une tension $U = K \cdot B \cdot I$.

Une boussole électronique utilisant deux sondes de Hall placées orthogonalement l'une par rapport à l'autre a déjà été décrite dans les pages 112 et suivantes de la revue Electronics du 18 décembre 1980 dans un article intitulé : « Hall compass points digitally to headings ». Dans cet article cependant, aucune indication n'est apportée sur l'intégration possible d'un tel système à une pièce d'horlogerie. Notamment, l'affichage se contente d'indiquer un angle sans préciser comment il pourrait être ajouté ou combiné aux autres indications d'heure et de date que doit comporter une montre. La présente invention reprend le principe de base exposé dans l'article cité tout en l'adaptant aux conditions particulières qui doivent être considérées pour son intégration dans une montre.

La figure 3a représente en perspective et à grande échelle un dispositif détecteur de champ magnétique terrestre tel qu'il se présente dans la pièce d'horlogerie. Il comporte deux détecteurs statiques 22 et 23 identiques à celui décrit à propos de la figure 3b. De part et d'autre des faces sensibles 29 de chacune des sondes 22 et 23, on dispose des concentrateurs de flux en forme d'entonnoirs 24, 25 et 26, 27. Ces concentrateurs permettent d'augmenter l'intensité du champ magnétique terrestre (représenté par les lignes de force 28) au niveau des faces sensibles 29. Ils sont constitués de matériau magnétique extrêmement perméable. Comme cela est montré sur la figure 3a, les sondes sont orthogonales l'une à l'autre et la sonde 22 est tournée pour présenter ses faces sensibles 29 perpendiculairement à la direction principale du champ magnétique terrestre, et la tension U recueillie aux bornes de ses électrodes C-C' (voir figure 3b) est maximum. La sonde 23, qui est normale à la sonde 22, ne produit aucun signal puisqu'elle n'intercepte aucune ligne de force 28. Des mesures faites sur ce système équipé de concentrateurs dont les dimensions sont compatibles avec l'espace mis à disposition dans une montre permettent de constater une augmentation d'induction magnétique d'environ dix fois amenant ainsi ladite induction à une valeur de l'ordre de $5 \cdot 10^{-4}$ Tesla.

Il est clair que pour assurer un bon fonctionnement du détecteur, certaines précautions particulières devront être prises lors de son intégration à la pièce d'horlogerie. Il sera nécessaire, par exemple, d'habiller la montre avec un boîtier en matière plastique ou avec du métal non magnétique. De même, si l'affichage du temps est réalisé par des aiguilles entraînées par un moteur pas à pas, on aura soin de blinder le moteur pour éviter qu'il ne rayonne un champ parasite et on disposera ledit moteur par rapport au détecteur, à un endroit où le champ terrestre n'est pas perturbé par son blindage. En fait, ces précautions pourraient être les mêmes que celles qui ont été mentionnées dans la demande FR-2 438 861 déjà citée où il s'agissait de ne pas perturber l'aiguille aimantée par la présence du moteur pas à pas.

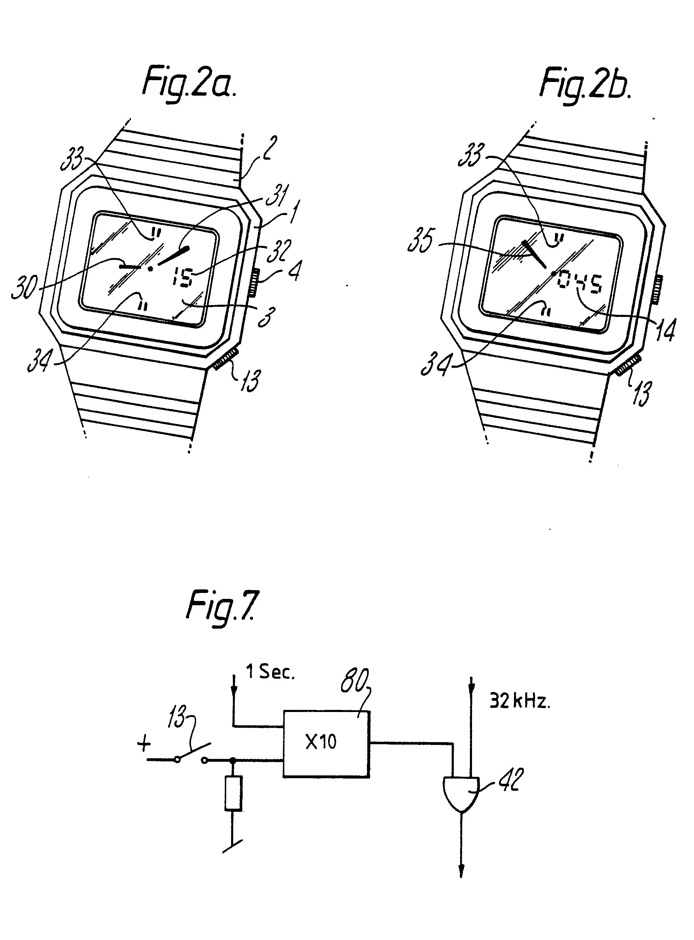

Les figures 2a et 2b représentent une seconde variante d'exécution de la pièce d'horlogerie selon l'invention qui comporte un boîtier 1 auquel est attaché un bracelet 2 et un affichage 3 apparaissant sous une glace de protection. Dans la figure 2a, l'indication de l'heure 30 et de la minute 31 apparaît sous forme analogique et la date 32 sous forme numérique. La mise à l'heure est réalisée au moyen de la couronne 4. Dans une version préférée, le temps et la date sont affichés au moyen d'une cellule à cristal liquide.

La pièce d'horlogerie comporte en outre un axe fixe matérialisé par des repères 33 et 34 situés à 12 et à 6 heures qui peuvent faire partie de la cellule à cristal liquide ou encore être gravés sur la face interne de la glace. Le dispositif d'orientation est mis en action en actionnant la commande 13. L'affichage se présente alors comme le montre la figure 2b. A ce moment, le détecteur de champ magnétique terrestre, tel qu'il a été décrit à propos de la figure 3a, communique ses données à l'affichage et au moins l'indicateur des minutes 31, perdant alors sa fonction horaire, s'aligne en direction du Nord formant le trait rectiligne 35, son extrémité extérieure indiquant le Nord. Le chiffre 14 indique alors l'angle que fait l'axe fixe formé des repères 33 et 34 avec le Nord, c'est-à-dire sur l'exemple de la figure 2b, 45° Est. Le sens dans lequel il faut tourner la montre pour faire coïncider l'axe fixe avec la direction du Nord est immédiatement visible sur l'affichage (sur l'exemple, tourner la montre dans le sens anti-horaire).

Ainsi, dans cette variante, la direction et le sens du champ magnétique terrestre sont figurés par un trait rectiligne 35 qui normalement est utilisé comme indicateur des minutes 31 quand la montre affiche le temps. Pour éviter des confusions, soit on supprimera l'affichage de l'indicateur des heures 30, comme cela apparaît sur la figure, soit on alignera celui-ci sur l'indicateur 31 dans un sens diamétralement opposé.

Dans les deux variantes présentées en figures 1a à 1d et en figures 2a et 2b, on comprendra que l'indication de l'azimut chiffré n'est pas indispensable s'il s'agit d'orienter simplement une carte par rapport au lieu où l'on se trouve. Cette indication est cependant très utile dans le cas où c'est une direction connue qui est à suivre et qu'on ne dispose pas de carte. A ce moment, on oriente la montre jusqu'à ce qu'elle affiche l'azimut donné puis on suit la direction indiquée par l'axe fixe qui est l'axe de visée ou axe de marche. Dans ce cas, la boussole peut être complétée avantageusement par un miroir qui permet de repérer un point marquant sur le terrain qui indique la direction à suivre, comme cela est expliqué dans le brevet CH-346 826 déjà cité.

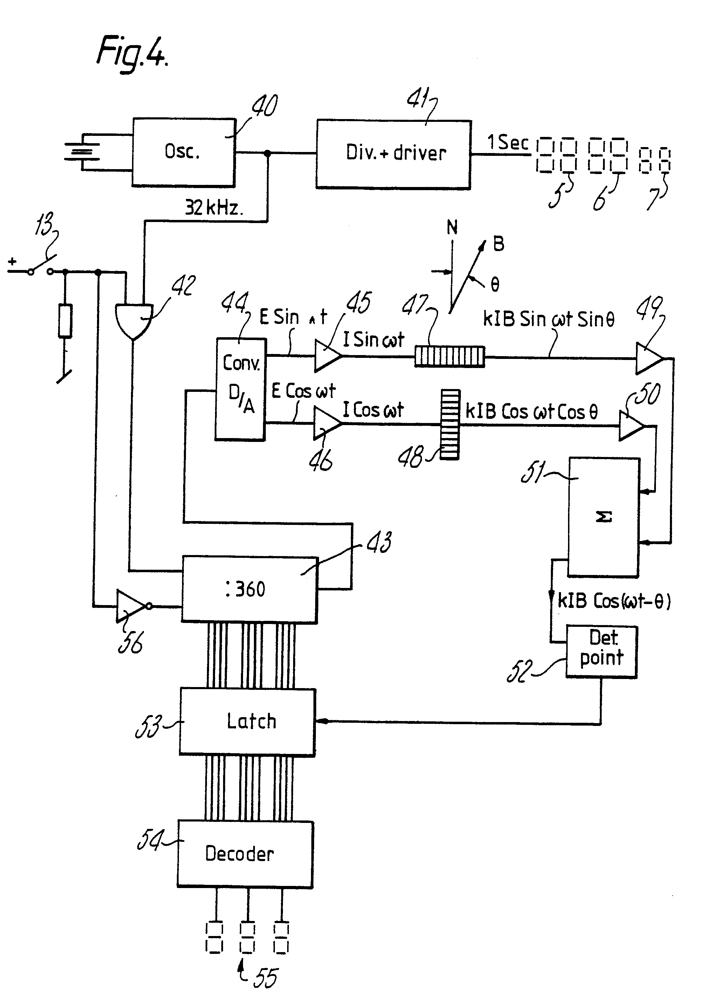

La figure 4 est un schéma électrique expliquant le fonctionnement de la pièce d'horlogerie équipée d'un dispositif d'orientation. Elle comporte une base de temps 40 et un diviseur-driver 41 arrangé pour afficher l'heure 5, la minute 6 et la seconde 7. La date peut également être affichée. Ces circuits bien connus de l'état de la technique ne seront pas décrits ici dans le détail. Selon l'invention, la montre comprend en outre un dispositif d'orientation dont les indications sont affichées lorsqu'on actionne un poussoir 13. Le fonctionnement est le suivant : lorsqu'on enclenche le poussoir 13, on ouvre la porte ET 42 qui laisse passer le signal à 32 kHz en provenance de l'oscillateur. Ce signal est compté par un compteur 43 qui compte par pas de 360, lequel à son tour commande un convertisseur digital-analogique 44 qui présente à ses sorties une première tension $E \sin \omega t$ et une seconde tension $E \cos \omega t$. Il s'agit en fait de deux tensions déphasées de $\pi/2$ et dont la fréquence égale 32 kHz/360 soit $\omega = 2\pi \cdot 32 \cdot 10^3/360 \ \text{sec}^{-1}$. Les deux tensions sont ensuite transformées en courant, la première en $I \sin \omega t$ et la seconde en $I \cos \omega t$ à travers les convertisseurs 45 et 46 pour alimenter les premier 47 et second 48 détecteurs de champ disposés à angle droit l'un par rapport à l'autre. Si $\theta$ est l'angle que fait la direction du pôle Nord (N) par rapport à l'orientation du dispositif détecteur, l'induction agissant sur les premier et second détecteurs sera de $B \sin \theta$ et $B \cos \theta$ respectivement et l'on recueillera sur les électrodes de sortie la tension $kIB \sin \omega t \sin \theta$ sur le premier détecteur et la tension $kIB \cos \omega t \cos \theta$ sur le second détecteur. Ces deux tensions, après avoir passé chacune par un amplificateur différentiel 49 et 50, sont additionnées dans un sommateur $\Sigma$ 51 dont la tension de sortie vaudra $kIB \cos(\omega t - \theta)$. Or, cette tension sera maximum pour $\omega t = \theta$, ce que va détecter un détecteur de pointe 52 qui va délivrer un signal pour bloquer l'indication délivrée par le compteur 43 à ce moment-là, cette indication apparaissant alors sur l'affichage, comme on va le voir plus loin.

Ainsi, par exemple, lorsque la sonde 48 a sa face sensible dirigée vers l'Est, l'angle $\theta$ vaut 90° et le détecteur de pointe 52 ne fournira un signal que lorsque l'angle $\omega t$, partie de la valeur des courants d'excitation $I \sin \omega t$ et $I \cos \omega t$, vaut également 90°, ce qui correspond à un contenu du compteur 43 égal à 90. Le tableau ci-dessous donne quelques situations principales du dispositif d'orientation par rapport à l'angle $\omega t = \theta$ :

| Orientation | Angle $\omega t = \theta$ (°) |
|---|---|
| ·Nord | 0 ou 360 |
| Nord – Est | 45 |
| Est | 90 |
| Sud – Est | 135 |
| Sud | 180 |
| Sud – Ouest | 225 |
| Ouest | 270 |
| Nord – Ouest | 315 |

La valeur fournie par le détecteur de pointe 52 commande un circuit de bloquage ou Latch 53 qui permet de maintenir la valeur atteinte par le capteur à 360 pas au moment où $\theta = \omega t$. Cette valeur décodée par le circuit 54 est ensuite affichée sur un affichage conventionnel 55 et donne l'angle de 0 à 360° que fait le dispositif d'orientation par rapport au Nord. Le circuit est complété par un inverseur 56 qui présente un état logique 1 lorsque l'interrupteur 13 est ouvert. Ce signal remet à zéro et interrompt alors le fonctionnement du dispositif d'orientation et les chiffres de l'affichage 55 pourraient alors être utilisés pour, par exemple, afficher la date.

Du schéma de la figure 4, comme des autres schémas qu'on décrira plus loin, il ressort qu'on tire profit de l'oscillateur 40 déjà présent dans la montre en tant que base de temps pour servir en même temps de source d'alimentation en courant du dispositif d'orientation. On peut en dire autant de certains affichages et de leurs décodeurs-drivers associés qui sont utilisés à la fois pour l'affichage du temps et pour l'indication du champ magnétique terrestre. De plus, si l'on ajoute à cela le fait que la pièce d'horlogerie se présente sous la forme d'une montre-bracelet ou d'une montre de poche, on comprendra tout l'intérêt qu'il y a à réunir dans un même objet les fonctions garde-temps et boussole.

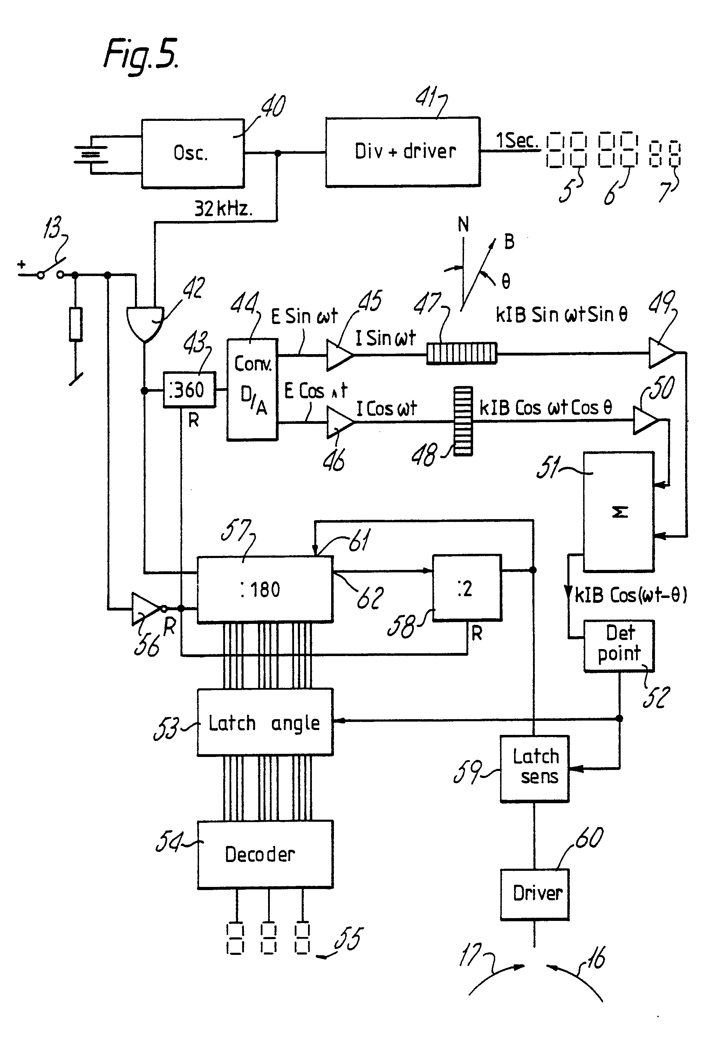

La figure 5 est un schéma électrique représentant le fonctionnement de la pièce d'horlogerie illustrée aux figures 1a à 1d. Dans la plupart des cas, par exemple lors de courses d'orientation, on prescrit une direction connue à suivre par rapport au Nord ou plus précisément un angle à l'est ou à l'ouest du Nord. A ce moment, une indication sur 360°, comme elle apparaît si l'on adopte le schéma de la figure 4, est mal commode. En effet, si une direction prescrite de 88° Est, par exemple, sera lue directement sur l'affichage, une autre direction prescrite, par exemple 105° Ouest, sera lue sur la boussole exécutée selon la figure 4 comme 255° et il sera toujours nécessaire pour les directions Ouest de retrancher mentalement à 360° l'angle donné à l'Ouest pour orienter la boussole dans la direction correcte. Telle que représentée aux figures 1a à 1d et réalisée selon le schéma de la figure 5, la pièce d'horlogerie remédie à l'inconvénient cité en sorte que l'horizon est divisé en deux demi-circonférences de 180° chacune, situées de part et d'autre de l'axe fixe 9. Les explications qui ont été données plus haut indiquent comment il faut se servir de la pièce d'horlogerie illustré sur les figures 1a à 1d. Le circuit mis en œuvre dans une telle pièce est illustré en figure 5.

On retrouve dans la figure 5 des éléments déjà décrits à propos de la figure 4 et qui portent les mêmes numéros de référence. Le signal de la porte 42 attaque, outre le premier compteur 43 par pas de 360 déjà connu, un second compteur 57 par pas de 180. A un état 0 sur son entrée 61, le circuit 57 compte les impulsions à 32 kHz en provenance de l'oscillateur (UP) et, à un état 1 sur la même entrée, le circuit 57 décompte ces impulsions (down). Quand la montre est tournée en direction Est, le compteur 57 va compter et afficher l'angle de façon croissante de 0 à 180°, comme cela a été expliqué à propos de la figure 4. Si la rotation de la montre dépasse l'angle de 180°, le compteur 57 émet un report à sa sortie 62, lequel report fait passer son entrée 61 à l'état 1 *via* la bascule 58. Le compteur 57 va décompter et afficher l'angle de la direction Ouest de façon décroissante de 180° à 0°.

Le schéma de la figure 5 montre encore que la sortie de la bascule 58 est connectée à l'entrée d'un circuit de verrouillage (Latch) 59 commandé par le détecteur de pointe 52. Si cette entrée est à l'état 0, c'est que la direction indiquée se trouve à l'Est de l'axe fixe 9 (0 à 180°), ce qui provoque l'excitation de la flèche 16 *via* le circuit driver 60 ; si, au contraire, cette entrée est à l'état 1, c'est que la direction indiquée se trouve à l'Ouest (de 180° à 0°) de l'axe fixe 9 et c'est la flèche 17 qui sera excitée.

Comme on l'a déjà mentionné, l'indication de l'azimut chiffré n'est pas indispensable s'il s'agit simplement d'orienter une carte par rapport au lieu où l'on se trouve. Dans ce cas, les circuits 53, 54 et l'affichage 55 peuvent être supprimés, les indications apportées par les flèches 16 et 17 étant suffisantes à cette orientation.

Enfin, le schéma de la figure 5 montre un inverseur 56 qui agit sur les compteurs 43, 57 et la bascule 58 pour assurer leur mise hors-circuit lorsque l'interrupteur 13 est ouvert. A ce moment, l'affichage des flèches 16 et 17 est supprimé et les chiffres 55 peuvent être utilisés pour afficher la date.

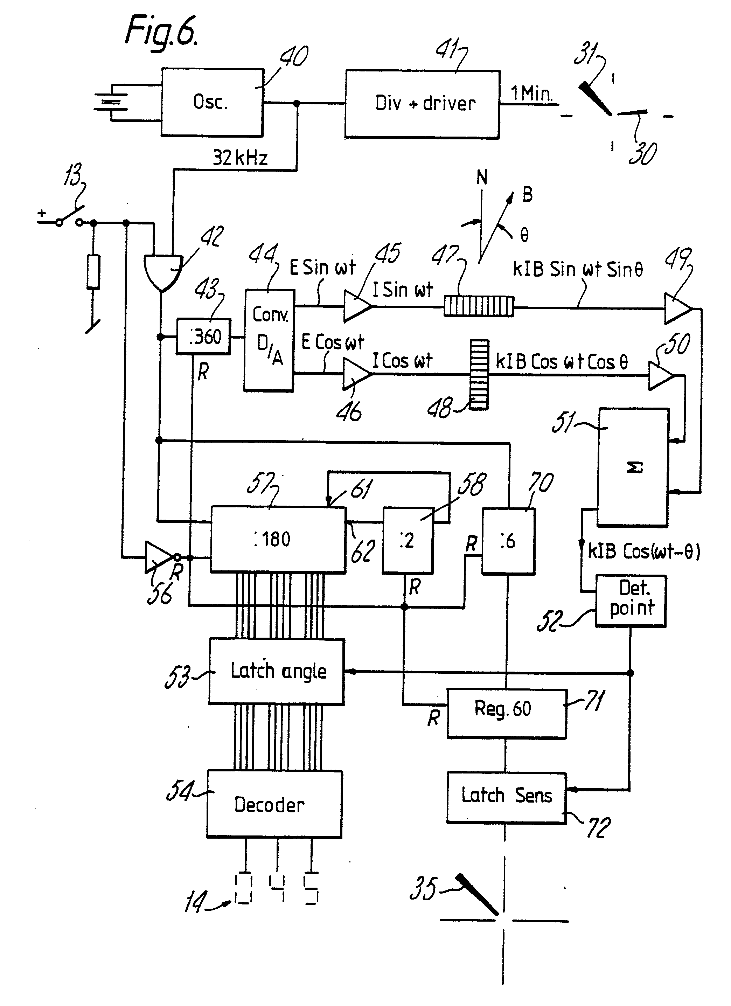

La figure 6 est un schéma électrique représentant le fonctionnement de la pièce d'horlogerie illustrée aux figures 2a et 2b où l'on retrouve des éléments déjà décrits à propos des figures 4 et 5. Notamment l'affichage de l'azimut 14 (figure 6) est réalisé de la même façon que l'affichage de l'azimut 55 (figure 5). Il n'y a donc pas lieu d'y revenir ici. La montre selon l'exécution de la figure 2a affiche l'heure au moyen de 60 segments à cristal liquide où 31 représente l'aiguille des minutes et 30 l'aiguille des heures. Au moment où l'on actionne le poussoir 13, lesdites aiguilles sont déconnectées de la commande 41 (driver) et sont utilisées pour indiquer la direction et le sens du champ magnétique terrestre. Cette commutation de l'affichage des segments n'est pas représentée en détail ici car elle est connue de l'homme du métier et n'entre donc pas dans l'objet de la présente invention.

En sortant de la porte 42, le signal à 32 kHz outre qu'il attaque le compteur 43 à 360 pas et le compteur-décompteur 57 à 180 pas, comme cela a été expliqué à propos de la figure 5, attaque aussi un compteur de 6 pas à 70 dont la sortie est connectée à l'entrée d'un registre à décalage par pas de 60 et référence 71. D'après la configuration utilisée, l'aiguille 31 peut prendre 60 positions réparties sur la circonférence et à chaque avance l'aiguille progressera de 6°. Ainsi, chaque fois que le compteur 70 aura reçu 6 impulsions du signal issu de la porte 42, il fera avancer le registre à décalage 71 d'un pas. Comme ce registre est suivi d'un circuit de verrouillage 72, commandé par le détecteur de pointe 52, l'aiguille 35 fixera sa position angulaire pour un angle $\theta$ correspondant à l'angle $\omega t$ selon le principe qui a été expliqué plus haut. Ainsi, le trait rectiligne 35 donne la direction et le sens du Nord et, selon l'exemple montré en figure 6, la direction 45° Est.

Comme on l'a déjà dit à propos des figures 4 et 5, on trouve un état 1 à la sortie de l'inverseur 56 quand le poussoir 13 est déclenché. A ce moment, l'affichage 14 est disponible pour afficher la date 32, comme on le voit sur la figure 2a.

Comme déjà mentionné, s'il s'agit simplement d'orienter une carte dans le direction du Nord, l'indication donnée par le trait rectiligne 35 suffit et l'on pourrait se passer des indications relatives à l'angle et simplifier le circuit de la figure 6 en supprimant les éléments 53, 54, 57 et 58.

La figure 7 est un schéma électrique applicable en variante à l'un quelconque des schémas illustrés aux figures 4, 5 ou 6. Comme on l'a expliqué, les sondes de Hall doivent être alimentées en courant sur leurs électrodes A-A' (voir figure 6b). Or, à l'état actuel des connaissances, ce courant d'alimentation est encore très important pour assurer un fonctionnement correct de la sonde. Avec les capacités relativement faibles des piles qui alimentent les montres et si l'on ne veut pas épuiser rapidement ces piles, il est indispensable de limiter dans le temps l'utilisation du dispositif d'orientation incorporé tel qu'il a été décrit ici. Pour parvenir à ce but, on peut mettre en œuvre le dispositif décrit en figure 7 où l'on trouve, intercallé entre le poussoir 13 et la porte 42 qui figurent aux schémas des figures 4, 5 et 6, un compteur par 10 référencé 80. Lorsqu'on presse sur le poussoir 13, la sortie du compteur 10 passe à l'état 1 et ouvre la porte 42. Cet état subsiste jusqu'à ce que 10 impulsions, espacées chacune d'une seconde et introduites à l'entrée du compteur 80 en provenance du diviseur de la montre, aient été comptées. Au terme du comptage, la sortie du compteur passe à l'état 0 et bloque la porte 42. Ainsi, dans cet exemple, l'utilisation de la boussole est limitée à une durée de 10 secondes. D'autres durées pourraient être choisies.

Comme cela vient d'être décrit, l'indication sur le sens dans lequel doit être tournée la pièce d'horlogerie pour aligner l'axe fixe sur le Nord est réalisée par affichage électro-optique (flèches 16, 17 ou trait rectiligne 35). On comprendra cependant que cette indication pourrait apparaître sous forme d'un signal acoustique qui se ferait entendre tant que ledit alignement n'est pas réalisé. Dans ces conditions, on pourrait mettre en œuvre deux fréquences audibles différentes suivant que l'on se trouve à l'est ou à l'ouest du Nord. L'indication sur le sens de rotation pourrait alors être matérialisée par un son d'intensité décroissante à mesure que l'on s'approche de l'alignement en question.

L'invention n'est pas limitée aux variantes d'exécution montrées dans les figures 1a à 1d et 2a à 2b. Il existe en effet d'autres combinaisons possibles entre l'affichage du temps et l'affichage de la direction et du sens du champ magnétique terrestre. Par exemple, une montre à double face, telle qu'elle a été décrite dans le brevet US-4 236 239, pourrait présenter sur l'une de ses faces la fonction horaire et sur l'autre la fonction boussole. L'invention pourrait aussi s'appliquer à une montre articulée comprenant au moins deux boîtiers reliés par une articulation, le premier contenant la montre et le second le dispositif d'orientation. Dans les exemples donnés plus haut, on met à profit l'affichage de la date du calendrier pour afficher la valeur de l'azimut lorsque la pièce d'horlogerie est utilisée comme boussole. Si la montre possède une fonction chronographe, ce pourrait aussi être les indications utilisées pour cette fonction qui pourraient être mises à profit pour afficher la valeur de l'azimut.

L'unité utilisée dans des exemples ci-dessus pour afficher l'azimut est donnée en degrés. Il est clair qu'on pourrait adopter une autre unité comme le grade, le radian ou le pour mille d'artillerie. Dans ce cas, il suffira de modifier les bases de comptage des compteurs 43 et 57 qui apparaissent dans les schémas.

Enfin, on comprendra que le système décrit ici pourrait comporter un dispositif électronique qui permette le réglage de la déclinaison. Un angle donné pourrait être introduit dans une mémoire faisant partie du circuit électronique de la montre pour corriger les erreurs variables dans l'espace et dans le temps dues à la déclinaison.

**Revendications**

1. Pièce d'horlogerie électronique comportant un affichage pour afficher des données horaires et un dispositif d'orientation sensible à la direction et au sens du champ magnétique terrestre, ledit dispositif d'orientation comprenant un détecteur statique (22, 23) et un affichage électro-optique (3) pour afficher les données issues dudit détecteur, caractérisée par le fait qu'elle comporte un axe fixe (9, 33, 34) et que l'affichage électro-optique comprend une indication sur le sens dans lequel doit être tournée la pièce d'horlogerie pour aligner ledit axe fixe avec l'axe du champ magnétique terrestre.

2. Pièce d'horlogerie selon la revendication 1, caractérisée par le fait que le détecteur statique comporte une combinaison de deux sondes (22, 23) à effet Hall dont les faces sensibles (29) sont équipées de concentrateurs (24, 25, 26, 27) de flux pour augmenter l'induction magnétique agissant sur lesdites faces.

3. Pièces d'horlogerie selon la revendication 1, caractérisée par le fait qu'elle comporte un seul oscillateur (40) pour servir à la fois de base de temps pour indiquer les données horaires et d'alimentation du détecteur statique pour afficher la direction et le sens du champ magnétique terrestre.

4. Pièce d'horlogerie selon la revendication 1, caractérisée par le fait que l'affichage électro-optique comporte en outre un nombre indicatif (14, 55) de l'angle que font entre eux lesdits axes.

5. Pièce d'horlogerie selon la revendication 4, caractérisée par le fait que le nombre indicatif de l'angle que font entre eux lesdits axes s'étend entre 0 et 180°, l'indication sur le sens dans lequel doit être tournée la pièce d'horlogerie permettant de connaître si l'axe fixe est situé à l'Est ou à l'Ouest de l'axe dudit champ magnétique terrestre.

6. Pièce d'horlogerie selon la revendication 1, caractérisée par le fait que l'indication sur le sens dans lequel doit être tournée la pièce d'horlogerie est figurée par une flèche (16, 17) dont la pointe est tournée vers l'axe fixe (9).

7. Pièce d'horlogerie selon la revendication 1, caractérisée par le fait que l'indication sur le sens dans lequel doit être tournée la pièce d'horlogerie est figurée par l'angle que forment entre eux l'axe fixe (33, 34) et un trait rectiligne (35) indiquant la direction et le sens du champ magnétique terrestre.

8. Pièce d'horlogerie selon la revendication 6 ou la revendication 7, caractérisée par le fait qu'elle comporte en outre un signal acoustique pour indiquer le sens dans lequel doit être tournée la pièce d'horlogerie.

9. Pièce d'horlogerie selon la revendication 7, caractérisée par le fait que les indications relatives au temps et celles relatives à la direction et au champ magnétique terrestre apparaissent séquentiellement en réponse à des actions exercées sur une commande manuelle (13), que les indications relatives au temps, affichées analogiquement au moyen d'une cellule à cristal liquide, sont représentées au moins par une aiguille des heures (30), une aiguille des minutes (31) et un nombre relatif à la date (32) et que les indications relatives à la direction et au sens du champ magnétique terrestre sont affichées par la même cellule au moyen des mêmes éléments sensibles, où le trait rectiligne (35) est figuré par au moins l'une desdites aiguilles (31), l'extrémité de celle-ci indiquant le Nord.

10. Pièce d'horlogerie selon la revendication 9, caractérisée par le fait que le nombre relatif à la date (32) est utilisé pour figurer un nombre indicatif de l'angle (14) que font entre eux l'axe fixe et le trait rectiligne lorsque la pièce d'horlogerie livre les indications relatives à la direction et au sens du champ magnétique terrestre.

11. Pièce d'horlogerie selon la revendication 9 ou la revendication 10, caractérisée par le fait qu'à la suite d'une action exercée sur ladite commande manuelle (13), les indications relatives à la direction et au sens du champ magnétique terrestre (14, 35) n'apparaissent que pendant un temps prédéterminé, limité par un circuit temporisateur (80).

**Claims**

1. An electronic timepiece including a display in order to display time data and an orientation device sensitive to the direction and sense of the terrestrial magnetic field, said orientation device comprising a static detector (22, 23) and an electro-optic display (3) in order to display data from said detector, characterized by the fact that it includes a fixed axis (9, 33, 34) and that the electro-optic display comprises an indication of the sense in which the timepiece must be turned in order to align said fixed axis with the axis of the terrestrial magnetic field.

2. A timepiece according to claim 1, characterized by the fact that the static detector comprises a combination of two Hall effect probes (22, 23) the sensing surfaces (29) of which are provided with flux concentrators (24, 25, 26, 27) in order to increase the magnetic induction acting on said surfaces.

3. A timepiece according to claim 1, characterized by the fact that it includes a unique oscillator (40) acting simultaneously as a time base for time data and as supply for the static detector in order to display the direction and sense of the terrestrial magnetic field.

4. A timepiece according to claim 1, characterized by the fact that the electro-optic display further provides a number (14, 55) indicative of the angle between said axes.

5. A timepiece according to claim 4, characterized by the fact that the number indicative of the angle

**0 078 510**

between said axes extends between 0 and 180°, the indication of the sense in which the timepiece must be turned allowing the determination whether the fixed axis is located to the East or to the West of the axis of said terrestrial magnetic field.

6. A timepiece according to claim 1, characterized by the fact that the indication of the sense in which the timepiece must be turned is in the form of an arrow (16, 17) the point of which is turned toward the fixed axis (9).

7. A timepiece according to claim 1, characterized by the fact that the indication of the sense in which the timepiece must be turned is given by the angle between the fixed axis (33, 34) and a rectilinear stroke (35) indicating the direction and the sense of the terrestrial magnetic field.

8. A timepiece according to claim 6, characterized by the fact that it further includes an acoustic signal in order to indicate the sense in which the timepiece must be turned.

9. A timepiece according to claim 7, characterized by the fact that the indications relative to the time and those relative to the direction and to the terrestrial magnetic field appear sequentially in response to actuation of a manual control (13), that the indications relative to the time, analogically displayed by means of a liquid crystal cell, are represented at least by an hours hand (30), a minutes hand (31) and a number indicating the date (32) and that the indications relative to the direction and to the sense of the terrestrial magnetic field are displayed by the same sensitive elements, where the rectilinear stroke (35) is provided by at least one of said hands (31), the outer extremity of which indicates North.

10. A timepiece according to claim 9, characterized by the fact that the number relative to the date (32) is used to form a number indicative of the angle (14) between the fixed axis and the rectilinear stroke when the timepiece gives the indications relative to the direction and to the sense of the terrestrial magnetic field.

11. A timepiece according to claim 9 or claim 10, characterized by the fact that following actuation of said manual control (13), the indications relative to the direction and to the sense of the terrestrial magnetic field (14, 35) appear only during a predetermined time, limited by a timing circuit (80).

**Patentansprüche**

1. Elektronische Uhr, mit einer Anzeige um die Zeit anzuzeigen und einer Orientierungsvorrichtung, die auf die Lage und die Richtung des Erdmagnetfeldes reagiert, wobei diese Vorrichtung einen statischen Detektor (22, 23) und eine elektro-optische Anzeige (3) aufweist um die von diesem Detektor gelieferten Werte anzuzeigen, dadurch gekennzeichnet, daß sie eine feststehende Achse (9, 33, 34) aufweist und daß die elektro-optische Anzeige einen Hinweis darauf enthält, in welcher Richtung die Uhr gedreht werden muß um diese feststehende Achse zur Achse des Erdmagnetfeldes auszurichten.

2. Uhr nach Anspruch 1, dadurch gekennzeichnet, daß der statische Detektor die Vereinigung zweier Hall-Effektsonden (22, 23) aufweist, deren empfindliche Flächen (29) mit Flußverstärkern (24, 25, 26, 27) vorgesehen sind zur Erhöhung der auf diese Flächen wirkenden magnetischen Induktion.

3. Uhr nach Anspruch 1, dadurch gekennzeichnet, daß sie einen einzigen Oszillator (40) aufweist, der sowohl als Zeitnormal dient zur Anzeige der Zeitwerte als auch zur Versorgung des statischen Detektors um die Lage und die Richtung des Erdmagnetfeldes anzuzeigen.

4. Uhr nach Anspruch 1, dadurch gekennzeichnet, daß die elektro-optische Anzeige außerdem eine Zahl (14, 55) enthält, die den Winkel angibt, den die beiden Achsen miteinander einschließen.

5. Uhr nach Anspruch 4, dadurch gekennzeichnet, daß die den Winkel angebende Zahl, den die beiden Achsen miteinander einschließen zwischen 0 und 180° beträgt, während die Angabe der Richtung, in welche die Uhr gedreht werden muß, die Feststellung ermöglicht, ob die feststehende Achse im Osten oder im Westen der Achse des Erdmagnetfeldes angeordnet ist.

6. Uhr nach Anspruch 1, dadurch gekennzeichnet, daß die Angabe der Richtung, in der die Uhr gedreht werden muß, mittels eines Pfeiles (16, 17) erfolgt, dessen Spitze zur feststehenden Achse (9) gerichtet ist.

7. Uhr nach Anspruch 1, dadurch gekennzeichnet, daß die Angabe der Richtung, in welche die Uhr gedreht werden muß mittels des Winkels erfolgt, der durch die feststehende Achse (33, 34) und einem gradlinigen Strich (35) festgelegt ist, der die Lage und die Richtung des Erdmagnetfeldes anzeigt.

8. Uhr nach Anspruch 6 oder 7, dadurch gekennzeichnet, daß sie zusätzlich ein akustisches Signal enthält zur Angabe der Richtung, in die die Uhr gedreht werden muß.

9. Uhr nach Anspruch 7, dadurch gekennzeichnet, daß die Zeitanzeigen und diejenigen der Lage des Erdmagnetfeldes nacheinander als Funktion wiederholter Betätigungen einer manuellen Steuerung (13) erscheinen, daß die Zeitanzeigen, die mittels einer Flüssigkristallzelle analog erfolgen, wenigstens einen Stundenzeiger (30), einen Minutenzeiger (31) und eine das Datum darstellende Zahl (32) aufweisen und daß die Anzeigen bezüglich der Lage und der Richtung des Erdmagnetfeldes von der gleichen Zelle mittels der gleichen Bauteile angezeigt werden, wobei der gerade Strich (35) durch wenigstens einen der genannten Zeiger (31) dargestellt wird, dessen ende Norden anzeigt.

10. Uhr nach Anspruch 9, dadurch gekennzeichnet, daß die das Datum darstellende Zahl (32) verwendet wird als eine den Winkel (14) darstellende Zahl, der zwischen der feststehenden Achse und dem geraden Strich eingeschlossen ist, wenn die Uhr die zur Lage und zur Richtung des Erdmagnetfeldes

8

gehörenden Anzeigen liefert.

11. Uhr nach Anspruch 9 oder 10, dadurch gekennzeichnet, daß als Folge einer Betätigung der manuellen Steuerung (13) die die Lage und die Richtung des Erdmagnetfeld darstellenden Anzeigen (14, 35) nur während einer vorgegebenen Zeit erscheinen, die durch eine Zeitbegrenzerschaltkreis (80) begrenzt ist.

**Fig.1a.**

**Fig.1b.**

**Fig.1c.**

**Fig.1d.**

# Fig.2a.

# Fig.2b.

# Fig.7.

Fig.3a.

28

29

25

22

24

28

26

28

23

29

27

Fig.3b.

A

A'

I

21

29

23

B

C

U

C'

# Fig.4.

# Fig.5.

# Fig.6.